# EUROPÄISCHE PATENTANMELDUNG

(11) **EP 0 960 603 A2**
(43) Veröffentlichungstag der Anmeldung: **01.12.1999**
(21) Anmeldenummer: 99104930.5
(22) Anmeldetag: 11.03.1999
(51) Int. Cl.: A61C 3/02

(54) **Dentalbohrer**

(30) Priorität: 27.05.1998 DE 19823720
(71) Anmelder: Gebr. Brasseler GmbH & Co. KG, D-32657 Lemgo (DE)
(72) Erfinder: Danger, Karl-Heinz, 32758 Detmold (DE)
(74) Vertreter: Weber, Joachim, Dr.

(57) **Zusammenfassung**

Die Erfindung bezieht sich auf einen Dentalbohrer mit einem Schaft (2) und einem mit Schneiden versehenen Schneidteil (3). Der Dentalbohrer (1) weist stirnseitig zwei Hauptschneiden (5) und seitlich am Schneidteil mehrere zusätzliche Schneiden (8) auf. Die Hauptschneiden (5) laufen in einer Mittelachse des Dentalbohrers zusammen und gehen unmittelbar in zwei seitliche Schneiden (8) über.

## Beschreibung

Die vorliegende Erfindung betrifft einen Dentalbohrer mit einem Schaft und einem mit Schneiden versehenen Schneidteil.

Im Dentalbereich werden Bohrer unter anderem dazu verwendet, Füllungen von Zähnen auszubohren. In vielen Fällen bestehen die Füllungen aus Amalgam, das einen hohen Anteil an Quecksilber enthält. Beim Ausbohren derartiger Füllungen entstehen kleinste Quecksilber-enthaltende Partikel bzw. Stücke, welche vom Patienten verschluckt werden können, sowie Quecksilberdämpfe, welche vom Patienten und/oder vom Zahnarzt eingeatmet werden können, und zu Quecksilbervergiftungen führen können. Somit besteht bei herkömmlich verwendeten Bohrern die Gefahr, daß Patienten und Zahnärzte einer hohen Quecksilberbelastung ausgesetzt werden.

Des weiteren ist es in der zahnärztlichen Präparationstechnik wichtig, daß beim Ausbohren von Füllungen möglichst wenig gesundes Zahnmaterial abgetragen wird. Dadurch wird zum einen der Zahn nicht mehr als notwendig geschädigt und zum anderen die anschließende Versorgung des Zahnes erleichtert, da das vorhandene gesunde Zahnmaterial in maximalem Umfang bestehen bleibt.

Aus der DE 196 02 030 A1 ist ein Bohrer für die Metallbearbeitung vorbekannt, bei welchem zwei stirnseitige Hauptschneiden in der Mittelachse zusammenlaufen und an ihren radial äußeren Endbereichen in zwei Nebenschneiden eines Schneidteils übergehen. Der Schneidteil weist keine zusätzlichen Schneiden auf.

Der Erfindung liegt die Aufgabe zugrunde, einen Dentalbohrer zu schaffen, welcher bei einfachem Aufbau und einfacher Handhabbarkeit kostengünstig herstellbar ist und ein schnelles, für den Patienten belastungsarmes Ausbohren von Füllungen ermöglicht.

Erfindungsgemäß wird die Aufgabe durch die Merkmale des Hauptanspruchs gelöst. Die Unteransprüche zeigen vorteilhafte Weiterbildungen der Erfindung.

Erfindungsgemäß ist somit ein Dentalbohrer mit einem Schaft und einem mit Schneiden versehenen Schneidteil vorgesehen. Stirnseitig weist der Dentalbohrer zwei Hauptschneiden bzw. eine Übergangsschneide auf. Seitlich am Schneidteil bzw. Kopf sind mehrere zusätzliche Schneiden angeordnet. Die Hauptschneiden des Dentalbohrers laufen in einer Mittelachse des Dentalbohrers zusammen und gehen unmittelbar in zwei seitliche Schneiden über. In einer günstigen Ausgestaltung bilden die Hauptschneiden dabei eine Spitze oder eine in Seitenansicht halbkreisförmige Übergangsschneide.

Der erfindungsgemäße Dentalbohrer zeichnet sich durch eine Reihe erheblicher Vorteile aus. Durch die Anordnung von zwei Hauptschneiden am stirnseitigen Bereich des Schneidteils bohrt der Dentalbohrer in axialer Richtung sehr gut. Da die beiden Hauptschneiden vorteilhaft derart gebildet sind, daß sie aufeinander zulaufen und sich an der Mittelachse des Dentalbohrers treffen, schneidet der Bohrer über den gesamten Bereich der Hauptschneide. D.h., der erfindungsgemäße Bohrer muß keine Querschneide aufweisen. Somit kann der nachteilige Einfluß der Querschneide, welche üblicherweise die beiden Hauptschneiden miteinander verbindet und in dessen Bereich das zu bohrende Material nur gequetscht wird, vermieden werden. Dadurch weist der Dentalbohrer sehr gute Schneidwirkungen auf und Füllungen können sehr schnell ausgebohrt werden. Da seitlich am Schneidteil mindestens zwei zusätzliche Schneiden vorgesehen sind, in welche die beiden Hauptschneiden unmittelbar übergehen, kann ein Zahnarzt auch in seitlich ansetzender Präparationstechnik Füllungsmaterial entfernen. Somit kann er durch Sektionieren der Füllung relativ große Materialstücke erzeugen, welche dann z.B. mittels einer Absaugeinrichtung einfach und zuverlässig aus dem Mund des Patienten abgesaugt werden können oder durch Ausspülen des Mundes aus diesem entfernt werden können. Dadurch wird die Gefahr, daß der Patient ausgebohrtes Füllungsmaterial verschluckt, deutlich vermindert.

Vorteilhaft sind die seitlichen Schneiden auf Schraubenlinien angeordnet. Dies ermöglicht eine relativ einfache Herstellbarkeit des seitlichen Schneidteils und verleiht dem Bohrer einen ausreichenden Querhieb, um Material in seitlich ansetzender Präparationstechnik zeitsparend abtragen zu können. Diese Anordnung ermöglicht ebenfalls die Unterdrückung von Schwingungen bzw. das Auftreten von Rattern des Bohrers.

Vorzugsweise weisen die seitlichen Schneiden radiale Einschnitte auf. Dadurch wird die Reibung am seitlichen Bereich des Bohrers verringert, so daß eine geringere Reibungswärme und damit weniger Quecksilberdämpfe entstehen. Somit kann insbesondere bei Amalgamfüllungen die Quecksilberbelastung für den Patienten und den Zahnarzt infolge von Quecksilberdämpfen minimiert werden. Die Reibungserzeugung kann durch gleiche bzw. durch unterschiedliche Abstände der einzelnen Abschnitte an den seitlichen Schneiden beeinflußt werden und somit in einfacher Weise für die jeweiligen Anforderungen, z.B. unterschiedliche Tiefen oder Größen der Füllungen, optimiert werden.

Um die Wärmeerzeugung durch die seitlichen Schneiden möglichst gering zu halten, sind die Einschnitte an den seitlichen Schneiden bezüglich einer Senkrechten zur Mittelachse in einem Winkel zwischen 5° und 15° angeordnet. Somit sind die Einschnitte der einzelnen seitlichen Schneiden in Längsrichtung des Dentalbohrers zueinander versetzt angeordnet.

In einer bevorzugten Ausführungsform weist der Dentalbohrer vier seitliche Schneiden sowie vier Drallnuten auf. Dadurch kann beim Ausbohren von Füllungen die Erzeugung relativ großer Materialstücke sichergestellt werden. Gleichzeitig wird auch eine hohe Abtragungsrate erreicht, so daß eine Füllung in kurzer Zeit ausgebohrt werden kann. Dadurch ergibt sich sowohl eine Zeitersparnis bei der Behandlung als auch eine Verringerung von Unannehmlichkeiten für den Patienten durch z.B. kürzeres Offenhaltenmüssen des Mundes. Somit können optimale Schnittparameter und geringste Belastungen für den Patienten erreicht werden.

Aufgrund der kürzeren Berarbeitungszeit und der längeren Standzeit ergeben sich somit insbesondere wirtschaftliche Vorteile bei der Verwendung des erfindungsgemäßen Bohrers.

Um eine hohe Schnittleistung sicherzustellen, können gemäß einer weiteren Ausgestaltung der Erfindung die seitlichen Schneiden in Form einer Kreuz- bzw. Diamantverzahnung gebildet sein. Dadurch werden beim Ausbohren ebenfalls relativ große Teilstücke der Füllung erzeugt sowie das Auftreten von Quecksilberdämpfen minimiert. Ebenfalls wird hierdurch die seitlich ansetzende Präparationstechnik in praktisch allen Stellungen des Bohrers zum Zahn bzw. der Füllung ermöglicht, Demnach eignet sich ein derartiger Bohrer insbesondere zum Ausbohren von Füllungen an schwer zugänglichen Bereichen des Mundes.

Je nach Einsatzzweck sind die Hauptschneiden gerade bzw. gekrümmt. Somit können verschiedene vorteilhafte Geometrien des Schneidteils und insbesondere der Stirnseite des Schneidteils sichergestellt werden. Dadurch kann ein erfindungsgemäßer Bohrer je nach Einsatzzweck bzw. Art der Füllung eine jeweils optimale Geometrie aufweisen.

Der erfindungsgemäße Bohrer kann in unterschiedlicher Form ausgestaltet sein, beispielsweise mit einem zylindrischen oder sich verjüngenden Schneidteil bzw. mit einem zylindrischen oder sich verjüngenden Schaft. Als Material für einen Dentalbohrer gemäß der vorliegenden Erfindung kann beispielsweise Hartmetall, rostfreier Stahl oder Werkzeugstahl verwendet werden.

Nachfolgend wird die Erfindung anhand von Ausführungsbeispielen in Verbindung mit der Zeichnung beschrieben. Dabei zeigt:
- Fig. 1: eine Seitenansicht eines erfindungsgemäßen Dentalbohrers gemäß einem ersten Ausführungsbeispiel der vorliegenden Erfindung;
- Fig. 2: eine Vorderansicht des in Fig. 1 gezeigten Dentalbohrers;
- Fig. 3: eine schematische Seitenansicht eines erfindungsgemäßen Dentalbohrers gemäß einem zweiten Ausführungsbeispiel der vorliegenden Erfindung;
- Fig. 4: eine Vorderansicht des in Fig. 3 dargestellten Dentalbohrers; und
- Fig. 5: eine Vorderansicht eines erfindungsgemäßen Dentalbohrers gemäß einem dritten Ausführungsbeispiel der vorliegenden Erfindung.

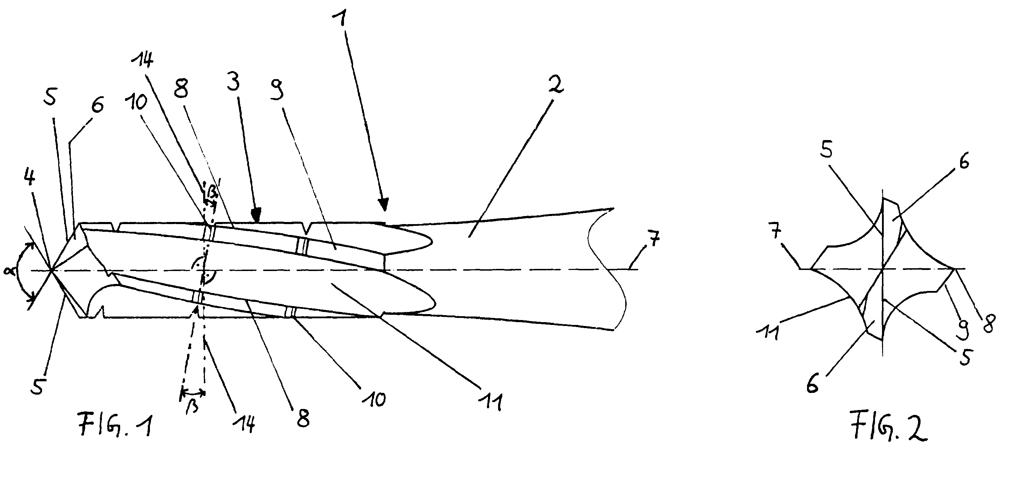

Die Fig. 1 und 2 zeigen ein erstes Ausführungsbeispiel eines erfindungsgemäßen Dentalbohrers 1. Der Dentalbohrer 1 dieses Ausführungsbeispiels weist einen sich verjüngenden Schaft 2 und einen Schneidteil bzw. Kopf 3 auf. Der Schaft 2 ist mit einer nicht dargestellten Antriebseinrichtung koppelbar, so daß der Dentalbohrer in Drehung versetzbar ist. Der Schneidteil 3 weist eine Hybridverzahnung auf, welche aus stirnseitigen und seitlichen Schneiden besteht. Hierbei sind an der Stirnseite des Schneidteils 3 zwei Hauptschneiden bzw. eine Übergangsschneide 5 vorgesehen, welche eine Spitze 4 bilden. Die Spitze 4 liegt hierbei auf einer Längsmittelachse 7 in einer Mittelebene 7' des Dentalbohrers 1 und weist einen Winkel α von ungefähr 118° auf. Es sind jedoch auch andere Spitzenwinkel denkbar. Vorzugsweise liegt der Winkel α zwischen 110° und 125°. Der Dentalbohrer 1 ist symmetrisch aufgebaut und weist des weiteren zwei Hauptfreiflächen 6 auf, welche jeweils unmittelbar an die Hauptschneiden 5 angrenzen.

Im seitlichen Bereich des Dentalbohrers 1 sind vier seitliche Schneiden bzw. Nebenschneiden 8 vorgesehen, welche schraubenförmig vom vorderen Teil des Schneidteils 3 zum Schaft 2 verlaufen. Um die Festigkeit der seitlichen Schneiden 8 zu erhöhen ist angrenzend an die seitlichen Schneiden 8 eine Fase 9 angeordnet. Jede der seitlichen Schneiden 8 bzw. Fase 9 weist Einschnitte 10 auf, welche über die gesamte Breite der Fase 9 verlaufen. In diesem Ausführungsbeispiel weisen die Einschnitte 10 eine kerbenförmige V-Form auf, sie können jedoch auch beliebige andere Formen wie z.B. eine U-Form oder eine mehreckige Form aufweisen. An jeder seitlichen Schneide 8 sind jeweils drei Einschnitte 10 vorgesehen, welche voneinander den jeweils gleichen Abstand aufweisen. Es ist jedoch auch eine andere Anzahl von seitlichen Schneiden 8 bzw. Einschnitten 10 denkbar.

Die Einschnitte 10 sind bezüglich einer Senkrechten 14 zur Mittelachse 7 in einem Winkel β angeordnet (vgl. Fig. 1). Vorzugsweise liegt der Winkel β zwischen 5° und 15°. In diesem Ausführungsbeispiel liegen die jeweils ertsen bzw. zweiten bzw. dritten Einschnitte 10 der einzelnen seitlichen Schneiden 8 auf einer Geraden (vgl. Fig. 1), wodurch die Einschnitte 10 jeweils in Längsrichtung des Dentalbohrers versetzt sind. Dies verringert zusätzlich die Wärmeerzeugung während des Bohrens, da die seitlichen Schneiden 8 jeweils an unterschiedlichen Punkten der Füllung ansetzten. Es ist auch denkbar, daß die Einschnitte jeweils in unterschiedlichen Winkeln bezüglich der Senkrechten zur Mittelachse angeordnet sind.

Des weiteren sind am seitlichen Bereich des Schneidteils 3 vier schraubenförmige Nuten bzw. Drallnuten 11 vorgesehen, welche jeweils zwischen den seitlichen Schneiden 8 angeordnet sind. Die schraubenförmigen Nuten 11 sind in Form eines Kreisbogens gebildet und verbinden jeweils eine erste seitliche Schneide 8 mit der Fase 9 einer zweiten seitlichen Schneide 8. Die Geometrie der schraubenförmigen Nuten kann jedoch auch anders ausgestaltet werden, wobei insbesondere auch die Steigung der Nuten 11 verschieden ausgeführt werden kann.

Durch die Schneidenausgestaltung des ersten Ausführungsbeispiels mit zwei Hauptschneiden und vier seitlichen Schneiden wird somit erreicht, daß der Dentalbohrer in axialer Richtung, d.h. in Richtung der Mittelachse 7, sehr gut bohrt, und das ausgebohrte Zahnfüllmaterial, insbesondere Amalgam, in relativ große Stücke zerteilt wird, so daß die Füllungsstücke z.B. mittels einer Absaugvorrichtung, einfach aus dem Mund des Patienten abgesaugt werden können. Durch die am Schneidteil seitlich vorgesehenen Schneiden 8 ist es ebenfalls möglich, die Füllung seitlich ansetzend zu entfernen. Infolge der an den seitlichen Schneiden 8 vorgesehenen Einschnitte 10 wird eine geringe Reibungswärme erzeugt und Quecksilberdämpfe treten nur in sehr geringem Umfang auf. Somit kann die Quecksilberbelastung insbesondere für den Patienten beim Ausbohren von Amalgamfüllungen auf ein Minimum reduziert werden. Da der Zahnarzt die Füllung auch seitlich ansetzend ausbohren kann, ergibt sich des weiteren verglichen mit dem Stand der Technik eine kürzere Bearbeitungszeit für das Ausbohren von Füllungen. Somit ermöglicht der erfindungsgemäße Dentalbohrer mit der Kombination von Hauptschneiden und seitlichen Schneiden eine schnelle und die Gesundheit des Patienten und des Zahnarztes nicht gefährdende Behandlung. Da das Ausbohren der Füllung auch seitlich ansetzend erfolgen kann, wird durch den erfindungsgemäßen Dentalbohrer gesundes Zahnmaterial beim Ausbohren so wenig als möglich geschädigt bzw. abgetragen.

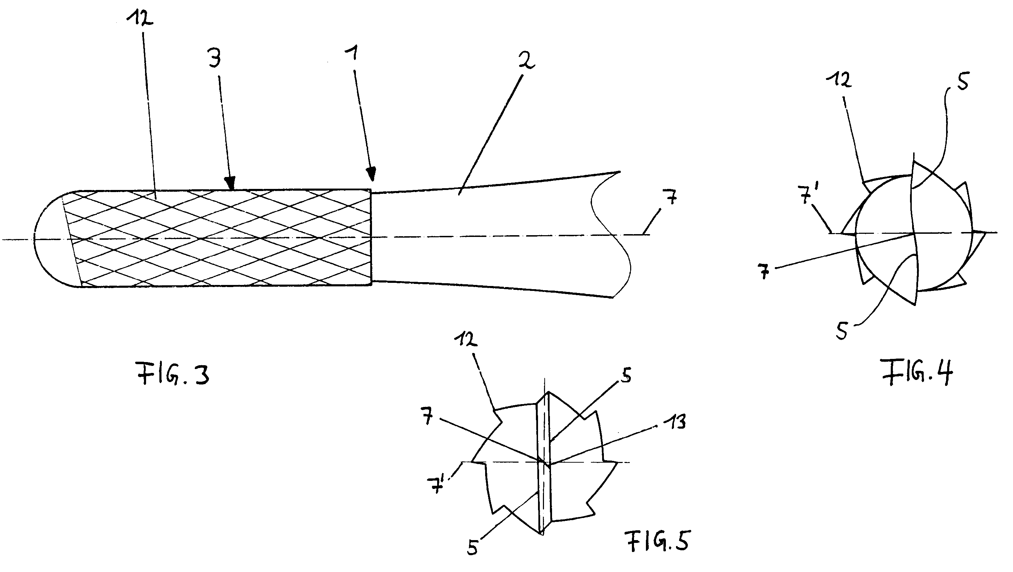

Die Fig. 3 und 4 zeigen ein zweites Ausführungsbeispiel eines erfindungsgemäßen Dentalbohrers 1. Der Dentalbohrer 1 besteht aus einem Schaft 2 sowie einem Schneidteil 3. Der Schneidteil 3 weist am stirnseitigen Ende zwei Hauptschneiden 5 auf, welche eine in Seitenansicht halbkreisförmige Übergangsschneide bilden (vgl. Fig. 3). Die beiden Hauptschneiden 5 laufen an einer Mittelachse 7 in einer Symmetrieebene 7' des Dentalbohrers zusammen (vgl. Fig. 4). Die Übergangsschneide ist gekrümmt ausgeführt und geht am Umfang des Bohrers in zwei seitliche Schneiden über. Die seitlichen Schneiden sind in diesem Ausführungsbeispiel in einer Kreuz- bzw. Diamantverzahnung 12 ausgeführt, wobei die seitlichen Schneiden den seitlichen Bereich des Schneidteils in mehrere Rhomben bzw. Parallelogramme unterteilen.

Der Bohrer des zweiten Ausführungsbeispiels der Erfindung ist ebenfalls symmetrisch aufgebaut und kann im vorderen Bereich des Schneidteils 3 an der Übergangsschneide 5 ausgespitzt werden. In Fig. 3 ist der vordere Bereich des Schneidteils 3 nur schematisch dargestellt. Des weiteren ist in diesem Ausführungsbeispiel der Schneidteil 3 zylindrisch gebildet, er kann jedoch auch konisch bzw. sich verjüngend gestaltet sein.

Durch das Vorsehen der Diamantverzahnung 12 am seitlichen Bereich des Schneidteils 3 in Verbindung mit den stirnseitig angeordneten Hauptschneiden 5 kann ein Zahnarzt Füllungen sowohl axial ausbohren, als auch Füllungsmaterial seitlich ansetzend mittels der Diamantverzahnung 12 entfernen. Da sich die Schneiden der Diamantverzahnung 12 am seitlichen Bereich des Schneidteils schneiden bzw. kreuzen, ergeben sich zwischen den einzelnen Schneiden der Diamantverzahnung 12 eine Vielzahl von Freiräumen, woraus eine relativ geringe Wärmeentwicklung beim Ausbohren der Füllung resultiert. Somit wird durch die Diamantverzahnung ebenfalls erreicht, daß beim seitlich ansetzenden Ausbohren der Füllung Quecksilberdämpfe nur in geringem Maße erzeugt werden und das Füllungsmaterial in relativ große Teilstücke unterteilt wird, welche dann einfach aus dem Mund eines Patienten entfernt werden können. Dadurch wird bei Amalgamfüllungen eine Quecksilberbelastung des Patienten minimiert. Der erfindungsgemäße Dentalbohrer ermöglicht es ebenfalls, die Behandlungszeit im Vergleich mit einem Bohrer gemäß dem Stand der Technik deutlich zu verringern. Auch wird durch die Möglichkeit des seitlich ansetzenden Ausbohrens das gesunde Zahnmaterial des Patienten so wenig als möglich geschädigt bzw. entfernt und das Ausbohren schwer zugänglicher Mundbereiche kann schnell und einfach durchgeführt werden. Die erzielten Oberflächen kommen überdies einer anschließenden Versorgung mit plastischem Füllungsmaterial entgegen.

Fig. 5 zeigt eine Vorderansicht eines Dentalbohrers gemäß einem dritten Ausführungsbeispiel der vorliegenden Erfindung. Stirnseitig sind zwei Hauptschneiden 5 vorgesehen, welche gerade ausgeführt sind. Die beiden Hauptschneiden 5 sind über eine Querschneide 13 miteinander verbunden. Die Querschneide 13 verläuft durch eine Mittelachse 7 (Längsachse), welche senkrecht zur Abbildungsebene verläuft (vgl. Fig. 5). Die beiden Hauptschneiden 5 gehen am Umfang des Dentalbohrers unmittelbar in zwei seitliche Schneiden einer Kreuz- bzw. Diamantverzahnung 12 über (vgl. Fig. 5). Beide Hauptschneiden 5 verlaufen jeweils auf einer Kreisbahn, welche etwas über eine Mittelebene 7' hinausgeht. In der Seitenansicht bilden die Hauptschneiden 5 einen Halbkreis, wie z.B. in Fig. 3 gezeigt. Der weitere Aufbau des Dentalbohrers entspricht dem des in Fig. 3 dargestellten zweiten Ausführungsbeispiels, so daß auf dessen Beschreibung zur Vermeidung von Wiederholungen bezug genommen werden kann.

Zusammenfassend wurde insoweit ein Dentalbohrer mit einem Schaft 2 und einem mit Schneiden versehenen Schneidteil 3 beschrieben. Der Dentalbohrer 1 weist stirnseitig zwei Hauptschneiden 5 und seitlich am Schneidteil mehrere zusätzliche Schneiden 8 auf. Die Hauptschneiden 5 laufen in einer Mittelachse des Dentalbohrers zusammen und gehen unmittelbar in zwei seitliche Schneiden 8 über.

Die Erfindung ist nicht auf die gezeigten Ausführungsbeispiele beschränkt, vielmehr ergeben sich im Rahmen der Erfindung vielfältige Abwandlungs- und Modifikationsmöglichkeiten.

## Patentansprüche

1. Dentalbohrer (1) mit
einem Schaft (2),
zwei stirnseitigen Hauptschneiden (5) und
einem mit Schneiden versehenen Schneidteil (3), wobei die Hauptschneiden (5) in einer Mittelachse (7) des Dentalbohrers (1) zusammenlaufen und an ihrem radial äußeren Bereich unmittelbar in zwei seitliche Schneiden (8, 12) übergehen,
dadurch gekennzeichnet,
daß am Schneidteil (3) mehrere zusätzliche Schneiden (8, 12) vorgesehen sind.

2. Dentalbohrer nach Anspruch 1, dadurch gekennzeichnet, daß die Hauptschneiden (5) eine Spitze (4) des Schneidteils (3) bilden.

3. Dentalbohrer nach Anspruch 1 oder 2, dadurch gekennzeichnet, daß die Hauptschneiden (5) in Seitenansicht einen Halbkreis bilden.

4. Dentalbohrer nach einem der Ansprüche 1 bis 3, dadurch gekennzeichnet, daß die seitlichen Schneiden (8) auf Schraubenlinien angeordnet sind.

5. Dentalbohrer nach einem der Ansprüche 1 bis 4, dadurch gekennzeichnet, daß die seitlichen Schneiden (8) radiale Einschnitte (10) aufweisen.

6. Dentalbohrer nach Anspruch 5, dadurch gekennzeichnet, daß die Einschnitte (10) in gleichen Abständen voneinander angeordnet sind.

7. Dentalbohrer nach Anspruch 5, dadurch gekennzeichnet, daß die Einschnitte (10) in unterschiedlichen Abständen voneinander angeordnet sind.

8. Dentalbohrer nach einem der Ansprüche 5 bis 7, dadurch gekennzeichnet, daß die Einschnitte (10) bezüglich einer Senkrechten (14) zur Mittelachse (7) in einem Winkel (β) von 5° bis 15° angeordnet sind.

9. Dentalbohrer nach einem der Ansprüche 1 bis 8, dadurch gekennzeichnet, daß der Schneidteil (3) vier seitliche Schneiden (8) und vier schraubenförmige Nuten (11) aufweist.

10. Dentalbohrer nach einem der Ansprüche 1 bis 3, dadurch gekennzeichnet, daß die seitlichen Schneiden in Form einer Kreuzverzahnung (12) gebildet sind.

11. Dentalbohrer nach einem der Ansprüche 1 bis 10, dadurch gekennzeichnet, daß die Hauptschneiden (5) gerade sind.

12. Dentalbohrer nach einem der Ansprüche 1 bis 10, dadurch gekennzeichnet, daß die Hauptschneiden (5) gekrümmt sind.

13. Dentalbohrer nach einem der Ansprüche 1 bis 12, dadurch gekennzeichnet, daß der Schneidteil (3) zylindrisch ist.

14. Dentalbohrer nach einem der Ansprüche 1 bis 13, dadurch gekennzeichnet, daß sich der Schneidteil (3) verjüngt.
